Europäisches Patentamt

European Patent Office

Office européen des brevets

(19)

(11) EP 0 591 061 B1

(12) FASCICULE DE BREVET EUROPEEN

(45) Date de publication et mention
de la délivrance du brevet:
**04.08.1999 Bulletin 1999/31**

(51) Int Cl.6: **G01S 7/52**, G10K 11/34

(21) Numéro de dépôt: **93402409.2**

(22) Date de dépôt: **01.10.1993**

(54) **Procédé et dispositif d'examen acoustique à retournement temporel**

Verfahren und Vorrichtung zur akustischen Prüfung mit Zeitumkehrsignalen

Method and device for acoustic examination with time reversal

(84) Etats contractants désignés:
**DE DK ES GB IT SE**

(30) Priorité: **02.10.1992 FR 9211659**

(43) Date de publication de la demande:
**06.04.1994 Bulletin 1994/14**

(73) Titulaire: **SOCIETE POUR LES APPLICATIONS
DU RETOURNEMENT TEMPOREL
92150 Suresnes (FR)**

(72) Inventeur: **Fink, Mathias
F-92190 Meudon (FR)**

(74) Mandataire: **Fort, Jacques
CABINET PLASSERAUD
84, rue d'Amsterdam
75440 Paris Cedex 09 (FR)**

(56) Documents cités:
**EP-A- 0 383 650**

- **IEEE TRANSACTIONS ON UFFC vol. 39, no. 5 ,
Septembre 1992 , NEW YORK (US) pages 555 -
556 M. FINK 'Time reversal of ultrasonics fields
- Part I : Basic principles.'**
- **JOURNAL OF THE ACOUSTICAL SOCIETY OF
AMERICA vol. 90, no. 2 , Août 1991 , NEW YORK
(US) pages 1119 - 1129 C. PRADA E.A. 'the
iterative time reversal miror: a solution to
self-focusing in the pulse echo mode'**

## Description

L'invention a pour objet un procédé et un dispositif d'examen acoustique d'un milieu (le terme acoustique devant être pris dans un sens général, sans limitation aux fréquences audibles) pour repérer des cibles présentant une impédance acoustique différente de celle du milieu environnant.

L'invention est applicable dans de nombreux domaines de la technique, parmi lesquels on peut citer :

- la détection et le repérage de défauts, tels que faille, crique, fissure et hétérogénéité de structures cristallographiques, dans des matériaux variés tels que les métaux, les composites et les céramiques, pour des objets de forme quelconque,
- la recherche d'objets solides en milieu marin ou dans les sédiments tapissant le fond de masses d'eau,
- le repérage d'hétérogénéités dans le sol,
- la localisation d'objets à saisir par un robot.

On connaît déjà (EP-A-0 383 650) un procédé d'examen acoustique non destructif d'un milieu suivant le préambule de la revendication 1.

Il suffit d'un faible nombre d'itérations pour faire apparaître uniquement les signaux réfléchis par le réflecteur le plus important du milieu ou par le point le plus réfléchissant d'une cible réflectrice étendue, sous forme d'un ensemble de signaux ayant un maximum prononcé sur chacune des voies de réception correspondant chacune à un des voies de réception correspondant chacune à un des transducteurs du réseau.

Dans des modes particuliers de mise en oeuvre du procédé défini ci-dessus, la répartition dans le temps des maxima des signaux est mémorisée en vue d'une utilisation ultérieure. Dans un autre mode de réalisation, l'échelonnement dans le temps des signaux est déterminé par l'intercorrélation entre couples de signaux. Cette dernière solution exige cependant des calculs lourds. L'une et l'autre des solutions ne donnent pas une indication directement interprétable sur l'emplacement de la cible ou des cibles présentes dans le milieu.

La présente invention vise notamment à fournir un procédé pouvant être appliqué à la détection de cibles réfléchissantes, à leur localisation, à l'imagerie échographique ultrasonore, et éventuellement à l'insonification (c'est-à-dire à la concentration d'énergie acoustique) d'une cible, répondant mieux que les procédés antérieurement connus aux exigences de la pratique.

Plus précisément, l'invention vise notamment, bien que non exclusivement, à résoudre divers problèmes liés à la technique du retournement temporel tel que défini ci-dessus. Jusqu'à présent, ce retournement temporel n'avait été envisagé que pour provoquer une autofocalisation qui se traduit par une focalisation optimale d'une émission en présence d'une cible. En d'autres termes, le procédé était destiné à créer une pression acoustique maximale à l'emplacement de la cible. Mais, pour beaucoup d'applications, il reste nécessaire ou du moins souhaitable de localiser la cible dans l'espace, une fois que la présence d'une cible a été reconnue. En particulier, il est souvent souhaitable de caractériser la cible précédemment détectée en formant une image de type échographique.

Cela rend nécessaire une autofocalisation en réception.

Par ailleurs le procédé défini plus haut, s'il donne des résultats favorables, présente en contrepartie une limitation lorsque l'on souhaite augmenter le nombre des itérations : les signaux échographiques deviennent de plus en plus longs au fur et à mesure que l'on répète les séquences de retournement temporel, ce qui se traduit par une perte de résolution axiale préjudiciable dans certains cas à la qualité des images.

Pour améliorer cette résolution axiale et ainsi mieux focaliser en émission, l'invention propose les dispositions énoncées dans la partie caractérisante de la revendication 1.

Cette solution permet notamment, une fois une cible repérée, de synthétiser un faisceau ultrasonore intense convergent vers le point le plus réfléchissant de la cible, notamment dans le cas où l'on cherche à détruire cette cible.

La loi de retard temporel obtenue peut également être utilisée pour sommer l'ensemble des signaux de réception après les avoir recalés par application de la loi de retard, sur toute la durée de la fenêtre temporelle (revendication 3). On peut ainsi synthétiser la surface d'one optimale, puis ultérieurement effectuer une focalisation en émission et/ou en réception.

On a constaté qu'en présence de cible réfléchissante, dans la zone sélectionnée par choix d'une fenêtre temporelle, un nombre impair de retournements temporels donne naissance, sur chaque voie, à un signal échographique de forme symétrique, ayant un maximum correspondant au mieux à l'emplacement du front d'onde dû à la réflexion sur la cible, ou en d'autre termes à la surface de ce front d'onde acoustique.

C'est pourquoi, après avoir éventuellement vérifié la présence d'un front d'onde et après un dernier retournement temporel d'ordre $2n+1$ (où $n$ est un nombre entier positif et nul) sur toute la profondeur d'une fenêtre temporelle de mesure, on détermine les caractéristiques du front d'onde passant au plus près des maxima desdits signaux, avantageusement sous la forme de la répartition temporelle des maxima, qui souvent pourra être approximée par une loi polynomiale.

On peut en déduire les retards temporels pour chaque transducteur, qui permettent de reconstituer ce front d'onde à l'émission. On peut par ailleurs faire la somme des signaux recalés par application desdits retards temporels pour réaliser une localisation.

Dans un mode avantageux de réalisation, on affecte des mémoires numériques de réception à chaque voie, c'est-à-dire à chaque transducteur utilisé à la réception et on détermine les instants d'arrivée des maxima de signal sur chaque transducteur par scrutation du contenu des adresses successives des mémoires affectées aux échantillons.

Un autre aspect de l'invention se rapporte à un dispositif tel que défini dans la revendication 16.

Recherche de cible réfléchissante éventuelle

Comme on l'a indiqué plus haut, la détermination de la position relative des maxima et le recalage des signaux en émission et/ou en réception ne doivent en général être effectués que si on a bien constaté d'abord la présence d'un front d'onde provenant d'une cible dans la fenêtre où sont effectués d'abord la mesure, puis le retournement temporel. De façon générale, la fenêtre de retournement temporel est choisie pour correspondre aux parties intéressantes du milieu à explorer.

La fenêtre peut être connue a priori, par exemple dans le cas où une cible a été préalablement repérée par échographie ou radiologie X. Elle peut également être déterminée en évaluant de façon grossière le temps de vol correspondant à la cible sélectionnée. L'emplacement et la largeur de la fenêtre temporelle sont choisis de façon que les signaux dus à la réflexion ou à la diffraction sur cette cible soient à coup sûr inclus dans la fenêtre. On peut encore, comme par exemple dans la recherche de défauts dans un matériau de grande épaisseur, diviser la profondeur d'exploration en plusieurs fenêtres et vérifier après plusieurs itérations de retournement temporel, s'il existe des échos importants au sein de la fenêtre. On peut pour cela, après chaque itération, effectuer, sur toute la durée des signaux dans la fenêtre, la somme incohérente des signaux reçus sur chaque voie et vérifier si le signal résultant présente un maximum local dans la fenêtre. La procédure de recherche des maxima sur chaque voie est alors subordonnée au résultat favorable d'une procédure de comparaison du signal résultant à un seuil déterminé.

Une autre procédure encore consiste à comparer les signaux reçus dans la fenêtre pour deux itérations successives. Cette dernière procédure est particulièrement intéressante dans le cas où on recherche la présence de défauts au sein d'un milieu diffusant formé de petites hétérogénéités réparties de façon dense et aléatoire. Les alliages de titane, les matériaux composites, les aciers à grains constituent des exemples de tels milieux. Si les signaux captés par les transducteurs du réseau proviennent d'une cible réfléchissante, leurs structures spatiales resteront pratiquement inchangées d'un tir au suivant. Si on contraire les signaux recueillis au cours de deux tirs successifs ne sont pas corrélés, c'est qu'ils proviennent de diffuseurs qui sont trop imbriqués dans le milieu pour pouvoir être séparés par l'opération de retournement temporel.

Une mesure de la corrélation ou du degré de ressemblance entre les signaux d'écho provenant de deux itérations successives peut être obtenue par sommation des coefficients d'intercorrélation de deux tirs consécutifs, pour chacun des transducteurs. Si on désigne par $E_k{}^p(t)$ le signal reçu dans la fenêtre temporelle lors de l'itération p par le transducteur d'ordre k et par $E_k{}^{p+1}(t)$ le signal reçu lors de l'itération p+1, la fonction de corrélation $c(\tau)$ totale entre les deux tirs s'écrit :

$$c(\tau) = \frac{\sum_k \int_0^T E_k{}^p(t).E_k{}^{p+1}(t-\tau)dt}{\left\{\sum_k \left[\int_0^T (E_k{}^p(t))^2 dt . \int_0^T (E_k{}^{p+1}(t))^2.dt\right]\right\}^{1/2}}$$

où T est la largeur de la fenêtre temporelle.

Le coefficient de corrélation est égal à la valeur du maximum de $c(\tau)$. Lorsque ce maximum est proche de 1, on peut on déduire que la fenêtre contient une cible réfléchissante. Lorsqu'il est inférieur à un seuil déterminé, sélectionné en fonction des conditions expérimentales et par exemple égal à 0,5, on peut en déduire que le milieu observé est diffusant et ne contient pas de cible prépondérante.

Lorsque les transducteurs sont séparés du milieu par une interface, les fenêtres temporelles (qui peuvent être les mêmes ou différentes lors de tirs successifs) seront choisies de façon à éliminer les échos sur l'interface proprement dit, ainsi que sur un interface arrière éventuel.

Localisation et imagerie

Les opérations ci-dessus peuvent être considérées comme destinées à rechercher la présence d'une cible éventuelle. Il reste à repérer ou à localiser la cible, et éventuellement à en former une image.

Lorsque l'on désire caractériser la cible en en fournissant une image, on peut mettre en oeuvre un procédé d'échographie fournissant une image de la zone entourant la cible qui génère le front d'onde repéré, en déterminant les positions temporelles relatives des maxima du front d'onde.

Pour cela, on peut utiliser divers procédés.

On peut notamment former une image de la première ligne de l'image échographique (celle qui est centrée sur la cible) en émettant un front d'onde d'illumination répondant à une excitation de durée très brève, par exemple d'environ une demi-période acoustique, en excitant les transducteurs dans un ordre complémentaire des retards, c'est-à-dire que le transducteur ayant reçu un signal à un instant $\tau$ sera excité à un instant $T_0$-$\tau$, $T_o$ étant une constante. On somme ensuite l'ensemble des signaux de réception, recalés par application des retards temporels.

Une autre approche consiste à effectuer une exploration sectorielle autour de la première ligne de l'image. Pour cela on modifie la loi des retards préalablement trouvée en en faisant la somme avec une autre loi de retard correspondant à une déviation du faisceau ultrasonore d'un angle $\theta$ faible, suivant la technique dit des réseaux de phase. En utilisant la nouvelle loi de retard en émission et en réception, on obtient alors, en sommant de nouveau les signaux reçus, une image échographique focalisée dans une direction faisant un angle $\theta$ par rapport à l'axe de la cible.

Par application de lois de retard correspondant à des angulations différentes, on obtient une image par balayage séquentiel.

Dans une autre variante encore, on émet non plus des impulsions brèves identiques sur chaque voie, mais des signaux dont chacun est le retourné temporel du signal reçu à la dernière itération, au cours d'un intervalle temporel relativement bref (quelques périodes) centré autour des maxima.

La focalisation latérale est alors meilleure que celle résultant de l'émission d'une simple surface d'onde, mais en contrepartie on réduit la résolution axiale.

Cette variante est particulièrement utile lorsqu'il est nécessaire de refocaliser à travers des milieux fortement inhomogènes, car elle améliore la refocalisation latérale. Elle résulte du fait que la focalisation optimale en un point est obtenue en ré-émettant un "volume d'onde" plutôt qu'une surface d'onde.

Pour la même raison, il peut être avantageux d'améliorer la focalisation en réception, surtout dans le cas d'un milieu inhomogène, en faisant le produit de convolution des signaux échographiques et des retournés temporels des signaux d'émission. Ce remplacement d'une simple opération de décalage temporel interdit l'utilisation de simples lignes à retard au profit de moyens matériels ou logiciels de convolution mais il donne un signal échographique plus intense pour une énergie donnée émise par l'ensemble des transducteurs, grâce à la sommation sur toutes les voies des produits de convolution. La lourdeur des calculs nécessaires n'est cependant justifiée que pour des milieux fortement inhomogènes.

Là encore il est possible de décaler angulairement les lignes de focalisation en décalant les signaux d'émission et/ou de réception par une loi de retard appropriée. Ce décalage peut notamment être effectué lorsqu'on met en oeuvre des convolueurs numériques, par un décalage temporel qui se traduit par un décalage dans la lecture des positions en mémoire contenant les signaux à émettre, avant convolution.

Comme on l'a indiqué plus haut, des calculs complexes ne sont généralement pas nécessaires dans le cas de milieux faiblement inhomogènes. Il suffit alors d'effectuer la focalisation et la synthèse d'une surface d'onde à partir de la position des maxima.

Dans ce cas on peut même souvent assimiler le front d'onde à une surface géométrique de forme simple au moyen d'une méthode d'optimisation mathématique au sens d'un critère déterminé, tel que celui des moindres carrés.

Le problème est encore simplifié dans le cas particulier d'un milieu pratiquement homogène, car le front d'onde provenant d'un point peut alors être assimilé à une surface sphérique.

On peut alors assimiler la loi de répartition des maxima à celle de la sphère qui lui correspond le mieux, suivant un critère prédéterminé, tel que celui des moindres carrés des écarts.

Une évaluation de la validité de l'approximation peut être faite en déterminant la variance des écarts. Si elle est suffisamment faible, on peut corriger ainsi les erreurs expérimentales.

Cela est particulièrement souhaitable lorsque, au cours d'une étape finale, on reproduit la répartition des retards correspondant au front d'onde assimilé à une sphère, pour concentrer une énergie ultra-sonore sur la cible la plus réfléchissante.

Il est par ailleurs possible, dans la plupart des cas, de déduire par le calcul les caractéristiques de la sphère des résultats fournis par un petit nombre des transducteurs d'un réseau et d'en déduire les retards à appliquer à chacun des transducteurs du réseau, à l'émission, pour focaliser l'énergie sur une cible qui peut être décalée latéralement par rapport à l'axe du réseau. Dans le cas d'un milieu homogène, on peut ainsi mettre en oeuvre l'invention en n'équipant de moyens de retournement temporel que les voies de mesure de quelques transducteurs.

L'invention sera mieux comprise à la lecture de la description qui suit d'un mode particulier de réalisation, donné à titre d'exemple non limitatif. La description se réfère aux dessins qui l'accompagnent, dans lesquels :

- les figures 1, 2 et 3 sont des schémas de principe montrant trois phases successives de mise en oeuvre du procédé suivant l'invention incluant des chronogrammes montrant l'allure des signaux électriques respectivement : appliqué à au moins un transducteur (figure 1) lors du premier tir ; obtenus à partir du premier tir (figure 2) ; et appliqués aux transducteurs (figure 3) après un retournement temporel ;
- la figure 3A montre un mode de synthétisation de front d'onde sphérique ;
- la figure 4 est un schéma de principe d'une voie de mesure associée à un transducteur particulier dans un dispositif selon un mode particulier de réalisation de l'invention ;
- la figure 5 montre une disposition matricielle possible des transducteurs dans un dispositif permettant de mettre en oeuvre l'invention ;
- la figure 6 est un chronogramme montrant les signaux d'écho fournis par trente deux des transducteurs constituant un réseau suivant le schéma de la figure 5, à la première réflexion sur une cible unique étendue (calcul biliaire par exemple) située dans le milieu étudié, en réponse à l'envoi d'une impulsion par le transducteur central ;
- la figure 7 est un chronogramme montrant les signaux reçus par les mêmes trente deux transducteurs parmi ceux ayant la disposition matricielle de la figure 5, après le premier retournement temporel ;
- les figures 8 et 9, similaires aux figures 6 et 7, montrent les signaux obtenus dans un milieu contenant trois cibles de tailles différentes, en forme de billes ;
- la figure 10, similaire à la figure 9, montre les signaux d'écho après cinq retournements temporels accompagnés chacun d'un fenêtrage ;
- les figures 11 et 12 montrent le champ de pression mesuré dans le plan contenant trois cibles et obtenu par émission du retourné temporel des signaux des figures 8 et 10, respectivement après un premier retournement et après cinq retournements et, dans ce dernier cas, avec activation des transducteurs suivant une loi "sphérique", dans le cas d'un dispositif dont les transducteurs sont répartis au sein du réseau de la figure 5 ;
- la figure 13 montre une répartition dans le temps des maxima des diverses voies de la figure 10, dans le cas d'un même milieu que celui ayant donné naissance aux signaux des figures 8 à 10 ;
- la figure 14 montre la répartition dans le temps des signaux émis pour reconstituer une surface d'onde sphérique qui approxime au mieux la répartition de la figure 13 ;
- les figures 15 et 16 montrent la variation dans le temps t de la somme incohérente (figure 15) et de la somme cohérente (figure 16) des signaux reçus sur les différentes voies dans le cas de signaux d'écho provenant d'un milieu solide présentant deux interfaces nets et un défaut localisé en volume, au stade du retour d'une émission au niveau de la figure 3 ;
- la figure 17 montre un mode de sommation, après produit de convolution des signaux reçus après une émission à retournement temporel par les signaux retournés d'émission.

L'invention est susceptible d'être mise en oeuvre à l'aide d'un dispositif du genre décrit dans le document EP-A-0 383 650, déjà mentionné. En conséquence, ce dispositif ne sera que sommairement décrit ici.

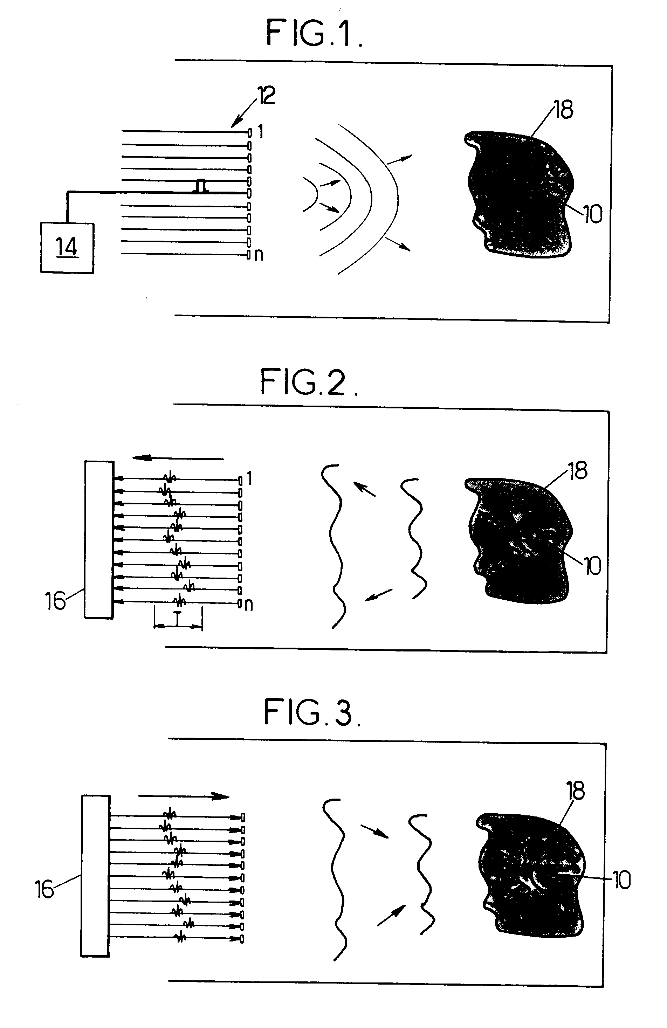

Comme le montrent les figures 1 à 3, la mise en oeuvre du procédé selon l'invention est destinée à provoquer la formation progressive d'un champ de pression acoustique convergeant vers la cible principale 10 placée dans un milieu 18.

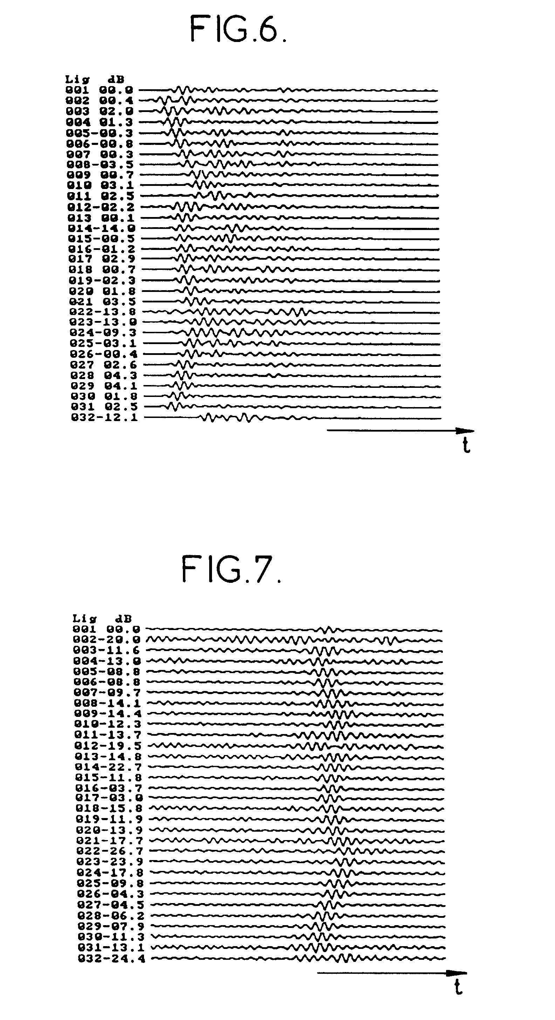

Au cours d'une étape (a), on illumine la zone dans laquelle se trouve la cible 10 à localiser à l'aide d'un faisceau large non focalisé (figure 1). Sur la figure 1, ce faisceau est fourni par le transducteur central d'une matrice 12 de transducteurs ultra-sonores 1, 2,..., i,..., n (avec n = 64 par exemple) qui sera utilisée au cours des étapes suivantes. Ces transducteurs seront souvent répartis suivant une matrice à deux dimensions, bien que les transducteurs soient montrés suivant une seule ligne. La matrice peut être plane ou concave. Elle peut être à réseau rectangulaire. Les transducteurs peuvent également être répartis suivant des cercles concentriques, comme indiqué sur la figure 5, ou même suivant une répartition lacunaire dans l'espace.

Il est également possible d'utiliser quelques transducteurs de la matrice, ou même tous, pour la première illumination. Dans le cas montré sur la figure 1, le transducteur central est excité, au cours de la première illumination, par un circuit 14. On obtient ainsi un faisceau non focalisé éclairant la cible 10, située dans un milieu 18.

Le circuit 14 peut être un générateur d'impulsions brèves attaquant un ou plusieurs transducteurs.

Au cours d'une étape (b), on capte le signal d'écho reçu par les transducteurs de la matrice 12 et on mémorise la forme et la position relative dans le temps $\underline{t}$ des signaux, à l'aide d'un circuit 16 (figure 2). Ces premiers signaux d'écho ont par exemple la forme montrée en figure 2 lorsque le signal électrique d'excitation de l'étape (a) est une impulsion brève.

L'examen, par exemple sur un oscilloscope ou un moniteur de télévision, des signaux reçus permet de sélectionner une fenêtre temporelle de durée T contenant la quasi-totalité de l'énergie réfléchie et recueillie par les transducteurs de la matrice 12. Ce sont uniquement les signaux contenus dans cette fenêtre temporelle qui seront mémorisés dans le circuit 16.

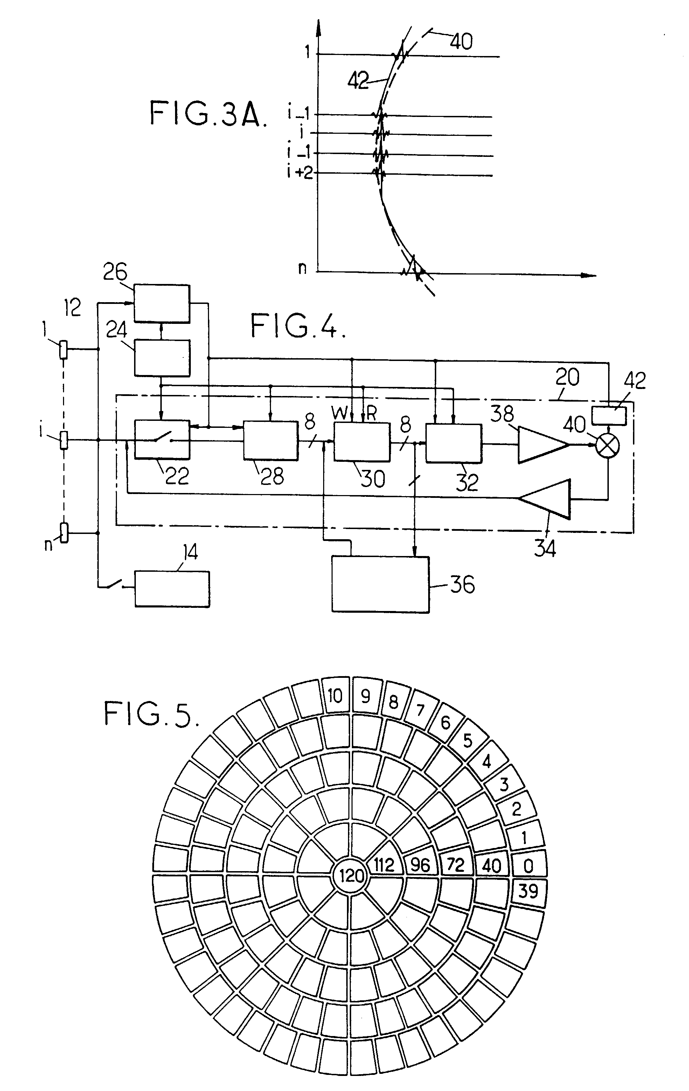

Au cours d'une étape (c), on retourne temporellement une première fois les signaux recueillis pendant la fenêtre temporelle T et on les ré-émet (figure 3) avec un gain d'amplification qui peut être le même pour tous les transducteurs. Il est réglé de façon automatique pour respecter une condition : aucune des voies ne doit être saturée en réception.

Le front d'onde ainsi constitué est automatiquement symétrisé et l'écho reçu en retour par les transducteurs de la matrice 12 apparaîtra, à la sortie de chacun de ces transducteurs, sous forme d'un signal symétrique par rapport à une valeur centrale maximale. Si le processus de retournement temporel et de mémorisation des échos est répété plusieurs fois, on recueillera, à chaque étape impaire, des signaux symétriques sur chaque voie de détection associée à un transducteur et en même temps, il se produira une concentration progressive de l'énergie sur la cible la plus importante, dans la mesure où le milieu contient plusieurs cibles, ou sur la partie la plus réfléchissante d'une cible.

Il est alors possible de déterminer, à partir des signaux recueillis lors de la dernière itération impaire effectuée, la ligne ou la surface géométrique simple 40 (telle qu'une sphère) la plus proche du front d'onde 42 défini comme la surface passant par les maxima des différents signaux.

L'intérêt de faire une approximation du front d'onde sous forme d'une surface ou une courbe géométrique simple est de permettre de déterminer aisément le centre ou le foyer de la surface et de connaître exactement la position de la zone la plus réfléchissante de la cible.

Cela permet de compléter le procédé par une étape finale adaptée à l'application envisagée.

Dans le cas où l'opération finale consiste en une opération de destruction, elle peut être effectuée avec une très forte amplification du signal appliqué à chaque transducteur et recalage de chacun des signaux par application d'un retard correspondant à la focalisation au centre de la surface 40.

Dans ce cas, la probabilité que le centre de la sphère corresponde à l'emplacement d'une zone de la cible à détruire devra généralement être proche de 100%. Pour atteindre cette quasi-certitude, une vérification sera généralement effectuée : elle consiste à déterminer la variance des écarts entre la surface 40 et les emplacements des maxima. On écarte alors la surface 40 en tant que représentation du front d'onde lorsque la variance dépasse une valeur prédéterminée.

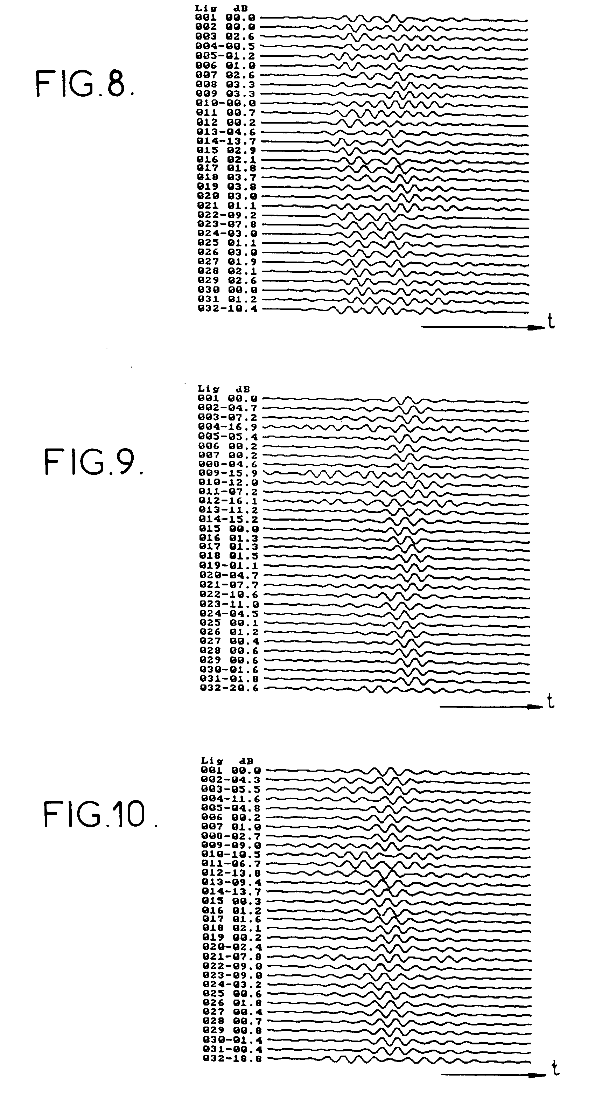

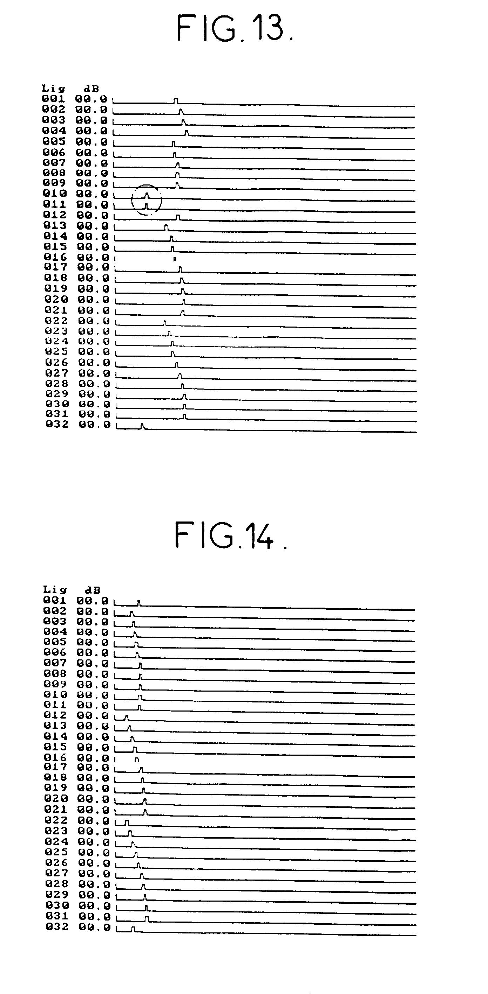

D'autres applications rendent souhaitable une évaluation de la taille de la cible. Pour cela, on peut notamment mémoriser les retards correspondant au front d'onde centré sur la zone la plus réfléchissante de la cible 10, puis effectuer des tirs avec des retards modifiés suivant une loi du type réseau de phase sectoriel pour correspondre à une focalisation sur des points ayant un décalage latéral. Pour chaque répartition de retards à l'émission on peut aussi effectuer une focalisation en réception en décalant tous les signaux de réception, suivant la loi des retards d'émission retournée et sommation sur tous les canaux. Suivant l'angle, on retrouve la figure 9 ou 10 qui permet une représentation en mode échographie B ou C à partir des retards de la figure 14 qui est un mode A.

La taille de la pièce peut être évaluée à partir de la distance $\underline{d}$ au-delà de laquelle l'amplitude maximale est inférieure à un seuil $\underline{s}$.

La recherche de la surface géométrique 40, représentable par une équation polynomiale, correspondant au mieux au front d'onde 42 peut s'effectuer par un procédé classique d'approximation polynomiale et en général on utilisera la méthode des moindres carrés.

L'invention peut être mise en oeuvre en utilisant un dispositif dans lequel chaque voie de mesure 20 associée à un transducteur d'ordre $\underline{i}$ a la constitution montrée en figure 4. La voie 20 comporte un échantillonneur 22 qui fournit des échantillons analogiques du signal reçu par le transducteur $\underline{i}$, à la fréquence d'une horloge 24, pendant les fenêtres temporelles T fixées par le cadenceur 26. Les échantillons numérisés par un convertisseur 28 sont mémorisés dans une mémoire 30 organisée en pile d'attente ou LIFO.

Le cadenceur 26 est programmé de façon à provoquer l'émission du front d'onde retourné au bout d'un délai déterminé après la fin de l'écho.

Pour appliquer au transducteur $\underline{i}$ le signal retourné, la voie 20 comprend un convertisseur numérique/analogique 32 suivi d'un amplificateur 34. Pour compenser l'absorption dans le milieu, la voie 20 représentée comprend un amplificateur 38 suivi d'un atténuateur 40 dont le coefficient d'atténuation est modifié en fonction du temps, par un programmateur 42 qui contient la fonction inverse de l'exponentielle négative d'absorption dans le milieu.

Le dispositif comprend encore des moyens de calcul 36 pour accéder à la mémoire 30 en lecture et en écriture, permettant de déterminer, pour chaque signal mémorisé, l'emplacement temporel du maximum, contenant un programme de détermination de la surface ayant la meilleure correspondance possible avec la répartition temporelle des maxima obtenue par lecture des mémoires 30 et permettant éventuellement de modifier, dans chaque mémoire 30, la valeur et la position temporelle des échantillons de façon à faire exactement correspondre le dernier tir à l'approximation géométrique effectuée du front d'onde.

L'électronique du dispositif peut avoir d'autres constitutions que celle montrée en figure 4. En particulier, il est possible d'utiliser une disposition du genre décrit dans la demande de brevet FR 91 13629 où chaque voie comprend successivement un amplificateur logarithmique à commande de gain, un convertisseur analogique-numérique qui échantillonne le signal et quantifie chaque échantillon. Le signal numérisé peut être communiqué à un bus vidéo permettant la visualisation. Il est également appliqué à un ensemble de mémorisation et de compensation de profondeur ayant une mémoire vive et un additionneur-soustracteur permettant d'ajouter au signal une rampe numérique mémorisée. La voie sera complétée par un détecteur de signe placé à l'entrée de l'amplificateur logarithmique.

Dans ce cas, la partie du dispositif consacrée à la ré-émission comprend un circuit d'exponentiation (mémoire vive par exemple). Les signaux numériques obtenus sont dépourvus de signe du fait de la conversion logarithmique. Un signe leur est affecté, par exemple par ajout d'un bit de signe dans la mémoire. Ce bit est fourni par le détecteur de signe. La mémoire est lue en retournement temporel. Les échantillons numériques polarisés lus en mémoire sont mis sous forme analogique par un convertisseur numérique-analogique, et appliqués à un amplificateur linéaire attaquant le transducteur d'où provient le signal.

Comme on l'a indiqué plus haut, les transducteurs peuvent être répartis suivant des matrices de natures très diverses.

La figure 5 montre, à titre d'exemple, une matrice à 121 transducteurs, numérotés de 0 à 120.

Les figures 6 et 7 montrent les signaux qui apparaissent dans un dispositif mettant en oeuvre le procédé suivant l'invention, avec une matrice de 121 transducteurs, dans le cas d'un milieu contenant une seule cible très réfléchissante. La figure 6 montre la variation dans le temps des signaux d'écho fournis par les trente deux transducteurs (le transducteur 1 étant le plus éloigné de l'axe) en réponse à une illumination par le transducteur central uniquement, c'est-à-dire les signaux obtenus lors de l'étape (b) définie plus haut. On constate que les signaux sont très dissymétriques et ne permettent pas une localisation précise du maximum du front d'onde.

Au contraire, les signaux d'écho reçus après le premier retournement temporel (étape (c)), illustrés en figure 7, font clairement apparaître d'une part la symétrisation, d'autre part la présence d'un maximum net, permettant déjà une bonne approximation.

La concentration du faisceau sur la cible se poursuit encore lors des itérations suivantes éventuelles, le signal d'écho étant symétrique à chaque itération impaire.

La cible n'étant pas centrée par rapport à la matrice de transducteur, les maxima s'alignent suivant une ligne oblique.

Les figures 8 et 9 sont similaires aux figures 6 et 7, mais correspondent au cas de trois cibles réparties dans le milieu ; la figure 10 est obtenue après cinq retournements temporels.

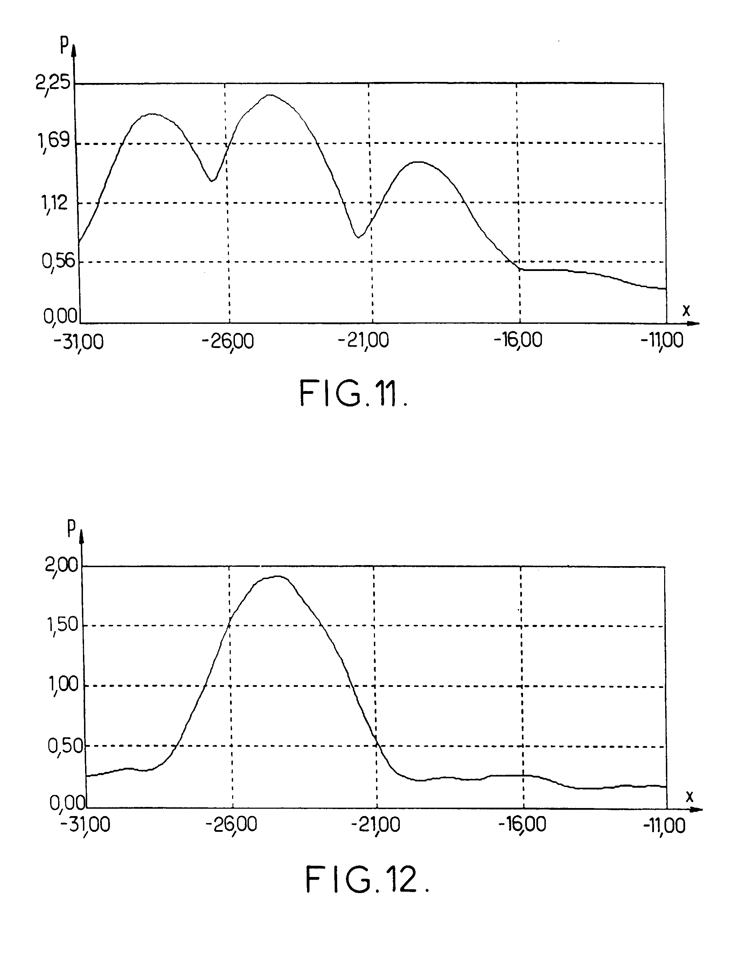

Les figures 11 et 12 montrent, en ordonnées, la pression acoustique mesurée dans le plan des cibles. Les cibles présentaient la même répartition que dans le cas des figures 8, 9 et 10 et étaient au nombre de trois.

La figure 11 montre la répartition de pression acoustique obtenue après le premier retournement temporel : la présence de trois maxima correspondant aux trois cibles apparaît déjà nettement. Cette localisation disparaît à l'issue du second retournement temporel.

Au fur et à mesure que l'on passe d'une itération impaire à la suivante, l'effet de focalisation sur la cible la plus importante s'accentue et, après le cinquième retournement, l'approximation du front d'onde par une sphère et la ré-émission avec une loi de retard correspondant au centre de la sphère, on arrive à la répartition de pression acoustique montrée en figure 12.

Les figures 13 et 14 montrent, à titre d'exemple, les résultats obtenus avec un réseau à 121 transducteurs et un milieu observé identique à celui qui donne naissance aux signaux des figures 8 à 10. La recherche des maxima à partir des signaux de la figure 10, par exemple par détermination des adresses des échantillons de valeur maximale, donne la répartition montrée en figure 13 où l'on note la présence de points aberrants, tels que ceux entourés par un cercle en traits mixtes. En écartant ces points aberrants, le front d'onde représenté par des échantillons sur la figure 13 permet de calculer les coordonnées de la cible. Puis, à partir du modèle théorique des coordonnées, il est possible de synthétiser le front d'onde par émission d'impulsions ayant la disposition relative montrée en figure 14, qui correspond à l'approximation par une sphère.

Comme on l'a indiqué plus haut, il est possible de rechercher la fenêtre temporelle à utiliser en effectuant, sur toute la durée des signaux reçus, la somme des enveloppes des signaux reçus sur chaque voie, c'est-à-dire une somme incohérente, afin de vérifier que le signal résultant présente un maximum local dans la fenêtre choisie.

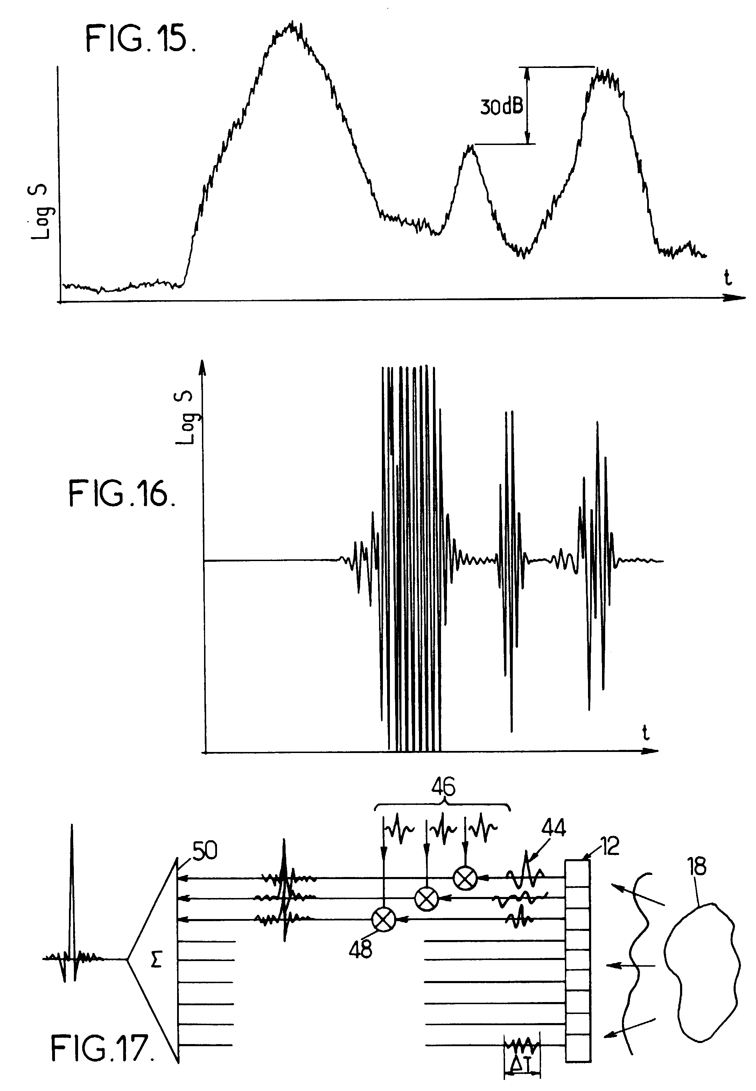

La figure 15 montre l'allure de la variation de la somme S des signaux reçus sur les différentes voies, après un retournement, dans le cas d'un réseau et d'un milieu étudié constitué par un bloc solide ayant un défaut localisé en volume.

On peut également effectuer la somme cohérente des signaux, c'est-à-dire une somme après recalage temporel et dans ce cas, on arrive à une répartition du genre montré en figure 16 qui met encore mieux en évidence la présence des cibles.

Enfin, lorsqu'une focalisation optimale en réception de signaux provenant d'un milieu inhomogène est nécessaire, le simple décalage temporel des signaux échographiques peut être remplacé par une opération de convolution entre les signaux échographiques 44 et les signaux 46 constituant les retournés temporels des signaux d'émission (figure 17). Les produits de convolution, obtenus dans des convolueurs individuels 48, sont additionnés dans un sommateur 50. On utilisera alors en général des systèmes numériques et on pourra adapter la fenêtre temporelle ∆T utilisée pour chaque voie afin qu'elle soit optimale.

**Revendications**

1. Procédé d'examen acoustique (sonore ou ultrasonore) non destructif d'un milieu pour repérer des cibles réfléchissantes, suivant lequel :

   (a) on illumine le milieu (18) à l'aide d'un faisceau acoustique à grande ouverture angulaire, à partir d'au moins un transducteur ;
   (b) on détecte les signaux réfléchis par le milieu et reçus par plusieurs transducteurs (1,...,n) appartenant à un réseau (12) ;
   (c) on sélectionne, au moyen d'une fenêtre temporelle (T), les signaux d'écho réfléchis par une zone particulière dudit milieu, et on les mémorise sous forme numérique ;
   (d) on retourne temporellement lesdits signaux d'écho, et on les ré-émet ; et
   (e) on mémorise les nouveaux signaux d'écho réfléchis et on répète l'opération de retournement temporel,

   dans lequel, après un dernier retournement temporel, on détermine les caractéristiques du front d'onde passant au plus près des maxima des signaux réfléchis,
   caractérisé en ce que : (f) on constitue un dernier front d'onde d'illumination, par émission, sur toutes les voies correspondant chacune à un de plusieurs transducteurs, de signaux de même forme et de durée très brève, à un instant défini pour chaque transducteur par un retard constituant un complément de la répartition temporelle desdits maxima, les premiers maxima correspondant aux signaux de durée très brève émis en dernier, en ce que le dernier retournement temporel est d'ordre 2n+1 (où n est un entier positif ou nul), et en ce que, après ce dernier retournement temporel, on détermine les caractéristiques d'une surface géométrique simple passant au plus près des maxima des signaux réfléchis, représentative du front d'onde des derniers échos reçus.

2. Procédé selon la revendication 1, caractérisé en ce qu'on fait la somme des signaux réfléchis à partir de signaux recalés par application desdits retards temporels sur toute la profondeur d'une fenêtre temporelle de mesure (fig. 16).

3. Procédé selon la revendication 1 ou 2 caractérisé en ce que, le milieu présentant une interface, les signaux réfléchis ne sont mémorisés au cours de l'étape (c) que pendant une fenêtre temporelle éliminant les échos sur l'interface.

4. Procédé selon la revendication 1, caractérisé en ce que, de plus, on explore sectoriellement la cible correspondant aux maxima, en maintenant une focalisation en émission et en réception, par combinaison desdits retards avec une autre loi de retards.

5. Procédé selon l'une quelconque des revendications 1 à 4, caractérisé par une étape préliminaire de détermination de ladite fenêtre temporelle (T) par affichage de la somme incohérente des échos provenant de ladite illumination et sélection de la fenêtre temporelle pour qu'elle encadre les maxima de tous les signaux réfléchis.

6. Procédé selon l'une quelconque des revendications 1 à 4, caractérisé en ce qu'on choisit de façon arbitraire la fenêtre temporelle, en fonction d'une information disponible sur la profondeur des cibles éventuelles (10) dans le milieu.

7. Procédé selon l'une quelconque des revendications précédentes, caractérisé en ce que l'on détermine une surface géométrique simple, telle qu'une sphère correspondant au mieux audit front d'onde suivant un critère déterminé et représentable par une équation polynomiale.

8. Procédé selon l'une quelconque des revendications précédentes, caractérisé en ce que le critère est celui des moindres carrés des écarts.

9. Procédé selon la revendication 8, caractérisé en ce que l'on détermine la variance des écarts et en ce que l'on écarte ladite surface en tant que représentation du front d'onde lorsque la variance dépasse une valeur prédéterminée.

**10.** Procédé selon la revendication 7, 8 ou 9, caractérisé en ce qu'au cours d'une étape ultérieure, on reproduit la répartition des retards correspondant à ladite surface pour concentrer une énergie ultrasonore sur la cible la plus importante.

**11.** Procédé selon la revendication 7, 8 ou 9, caractérisé en ce que, la surface étant une sphère, on déduit par le calcul, à partir des caractéristiques de la sphère, l'emplacement de son centre et les retards à donner aux signaux appliqués à chacun des transducteurs pour focaliser l'énergie émise par les transducteurs sur un point décalé latéralement par rapport audit centre.

**12.** Procédé selon l'une quelconque des revendications 1 à 11, caractérisé par une étape de recherche de cible réfléchissante (10) par comparaison des signaux d'écho réfléchis reçus au cours de deux itérations successives avec retournement temporel.

**13.** Procédé selon la revendication 12, caractérisé en ce que la ressemblance entre signaux reçus au cours d' itérations successives est déterminée par comparaison, à un seuil, de la mesure des coefficients d'intercorrélation de deux tirs consécutifs, pour chacun des transducteurs.

**14.** Procédé selon l'une quelconque des revendications 1 à 4, caractérisé en ce qu'à la réception on fait le produit de convolution des signaux échographiques et des signaux retournés temporels des signaux d'émission.

**15.** Procédé selon l'une quelconque des revendications précédentes, caractérisé en ce que, au cours de l'étape (c), on soumet les signaux d'écho analogiques provenant des transducteurs à une amplification logarithmique, on les mémorise sous forme d'échantillons numériques du logarithme affectés d'un bit de signe ; on ajoute une rampe numérique de compensation de profondeur aux échantillons ; et en ce que, au cours de l'étape (d), on réaffecte le signe aux échantillons corrigés, on effectue une exponentiation numérique des échantillons affectés d'un signe et on effectue une conversion numérique-analogique avant ré-émission par les transducteurs respectifs.

**16.** Dispositif d'examen acoustique d'un milieu pour repérer des cibles réfléchissantes, comprenant :

plusieurs transducteurs émetteurs-récepteurs constituant une matrice de transducteurs (12) ; un circuit (16) relié aux transducteurs et prévu pour, après une première émission vers le milieu, répéter un nombre impair de fois une séquence de réception des signaux d'écho provenant des transducteurs, de mémorisation desdits signaux et de ré-émission des signaux mémorisés vers les transducteurs après retournement temporel ;

caractérisé en ce que ledit circuit (16) comprend des moyens (36) pour déterminer les caractéristiques d'une surface géométrique passant au plus des maxima des signaux et représentant un front d'onde, et des moyens pour constituer un dernier front d'onde d'illumination, par émission, sur toutes les voies correspondant chacune à un de plusieurs transducteurs, de signaux de même forme et de durée très brève, à un instant défini pour chaque transducteur par un retard constituant un complément de la répartition temporelle desdits maxima, les premiers maxima correspondant aux signaux de durée brève émis en dernier.

**17.** Dispositif selon la revendication 16, caractérisé en ce que :

ledit circuit comprend, pour chaque transducteur (1,...,i,...,n) une voie (20) ayant un échantillonneur (22), un convertisseur analogique-numérique (28), une mémoire (30) organisée en pile d'attente, un convertisseur numérique-analogique et des moyens d'amplification et de compensation d'atténuation (38,40,42,34), et lesdits moyens de calcul sont prévus et programmés pour accéder à chacune des mémoires (30) en lecture et en écriture et pour modifier la valeur et la répartition temporelle des échantillons mémorisés pour les faire correspondre à l'approximation géométrique effectuée du front d'onde.

**Patentansprüche**

**1.** Verfahren zur akustischen (schallenden oder ultraschallenden), nicht destruktiven Prüfung eines Milieus zur Erkennung von reflektierenden Zielen, bei welchem

(a) man das Milieu (18) mit Hilfe eines akustischen Bündels mit einem großen Öffnungswinkel ausgehend von wenigstens einem Wandler bestrahlt;

(b) man die Signale detektiert, die von dem Milieu reflektiert und von mehreren Wandlern (1,...,n) empfangen werden, die zu einem Netz (12) gehören;

(c) man mit Hilfe eines Zeitfensters (T) die Echosignale auswählt, die von einer besonderen Zone des Milieus reflektiert werden, und man diese in numerischer Form speichert;

(d) man diese Echosignale zeitlich umkehrt und man sie zurückschickt;

(e) man die neuen reflektierten Echosignale speichert und die Operation der zeitlichen Umkehrung wiederholt,

wobei man nach einer letzten zeitlichen Umkehrung die Charakteristiken der Wellenfront bestimmt, die am nächsten an den Maxima der reflektierten Signale vorbeigeht, dadurch gekennzeichnet,

daß: (f) man eine letzte Bestrahlungswellenfront durch Sendung auf allen Wegen bildet, wobei jeder Weg jeweils einem der mehreren Wandler entspricht, und zwar mit Signalen derselben Form und sehr kurzer Dauer zu einem für jeden Wandler durch eine Verzögerung definierten Zeitpunkt, welche ein Komplement der zeitlichen Verteilung der Maxima bildet, wobei die ersten Maxima den Signalen mit sehr kurzer Dauer entsprechen, die zuletzt gesendet worden sind, daß die letzte zeitliche Umkehrung von der Größenordnung 2n+1 (wobei n eine positive ganze Zahl oder 0 ist) ist, und daß man nach einer letzten zeitlichen Umkehrung die Charakteristiken einer einfachen geometrischen Oberfläche bestimmt, welche am nächsten an den Maxima der reflektierten Signale vorbeigeht und repräsentativ für die Wellenfront der letzten empfangenen Echos ist.

2. Verfahren nach Anspruch 1,
dadurch gekennzeichnet,

daß man die Summe der Signale bildet, die ausgehend von den Signalen, die durch Anwendung der zeitlichen Verzögerungen auf der gesamten Tiefe eines zeitlichen Meßfensters (Fig. 16) durchgefallen lassen worden sind, reflektiert worden sind.

3. Verfahren nach Anspruch 1 oder 2,
dadurch gekennzeichnet,

daß das Milieu eine Zwischenfläche aufweist, wobei die reflektierten Signale während der Stufe (c) nur während eines Zeit fensters reflektiert werden, das die Echos auf der Zwischenfläche eliminiert.

4. Verfahren nach Anspruch 1,
dadurch gekennzeichnet,

daß man außerdem das den Maxima entsprechende Ziel sektoriell ausbeutet, in dem man eine Focussierung beim Senden und Empfangen durch Kombination der Verzögerungen mit einem anderen Verzögerungsgesetz aufrechterhält.

5. Verfahren nach irgendeinem der Patentansprüche 1 bis 4,
gekennzeichnet durch

eine vorausgehende Stufe zur Bestimmung des zeitlichen Fensters (T) durch Anzeige der inkohärenten Summe der Echos, die aus der Bestrahlung stammen, und durch Auswahl des Zeitfensters, damit es die Maxima aller reflektierten Signale einschließt.

6. Verfahren nach irgendeinem der Ansprüche 1 bis 4,
dadurch gekennzeichnet,

daß man das Zeitfenster zufällig in Abhängigkeit einer Information auswählt, die auf der Tiefe der eventuellen Ziele (10) in dem Milieu verfügbar ist.

7. Verfahren nach irgendeinem der vorangehenden Ansprüche,
dadurch gekennzeichnet,

daß man eine einfache geometrische Oberfläche bestimmt, wie eine Kugel, welche besser der Wellenfront gemäß einem vorbestimmten Kriterium entspricht und repräsentierbar durch eine Polynom-Gleichung ist.

8. Verfahren nach irgendeinem der vorangehenden Ansprüche,
dadurch gekennzeichnet,

daß das Kriterium dasjenige der geringeren quadratischen Abweichungen ist.

9. Verfahren nach Anspruch 8,
dadurch gekennzeichnet,

daß man die Varianz der Abweichungen bestimmt, und daß man die Oberfläche in der Eigenschaft als Darstellung der Wellenfront verschiebt, wenn die Varianz einen vorbestimmten Wert überschreitet.

10. Verfahren nach Anspruch 7, 8 oder 9,
dadurch gekennzeichnet,

daß man im Laufe einer späteren Stufe die Verteilung der Verspätungen entsprechend der Oberfläche reproduziert, um eine Ultraschallenergie auf dem wichtigsten Ziel zu konzentrieren.

11. Verfahren nach Anspruch 7, 8 oder 9,
dadurch gekennzeichnet,

daß die Oberfläche eine Kugel ist, und daß man durch Berechnung ausgehend von den Charakteristiken der Kugel den Ort ihres Zentrums und die Verzögerungen ableitet, die den auf jeden der Wandler angewendeten Signale zu geben sind, um die von den Wandlern gesendete Energie auf einen Punkt seitlich verschoben im Verhältnis zum Zentrum zu focussieren.

12. Verfahren nach irgendeinem der Ansprüche 1 bis 11,
gekennzeichnet durch

eine Stufe zur Suche des reflektierenden Zieles (10) durch Vergleich der reflektierten Echosignale, die im Laufe von zwei aufeinanderfolgenden Iterationen mit zeitlicher Umkehrung empfangen werden.

13. Verfahren nach Anspruch 12,
dadurch gekennzeichnet,

daß die Ähnlichkeit zwischen während aufeinanderfolgender Iterationen empfangener Signale durch Vergleich bei einem Schwellenwert des Maßes der Interkorrelationskoeffizienten von zwei aufeinanderfolgenden Abschüssen für jeden der Wandler bestimmt wird.

14. Verfahren nach irgendeinem der Ansprüche 1 bis 4,
dadurch gekennzeichnet,

daß man beim Empfang das Wiedervereinigungsprodukt der echographischen Signale und der zeitlich umgekehrten Signale der Sendesignale bildet.

15. Verfahren nach irgendeinem der vorangehenden Ansprüche,
dadurch gekennzeichnet,

daß man im Laufe der Stufe (c) die analogen Echosignale, die aus den Wandlern stammen, einer logarithmischen Verstärkung unterzieht, daß man sie in Form von numerischen logarithmischen Mustern speichert, versehen mit einem Bezeichnungs-Bit, daß man eine numerische Kompensationstiefenrampe zu den Mustern hinzufügt, und daß man im Laufe der Stufe (d) die Bezeichnung den korrigierten Mustern wieder hinzufügt, eine numerische Exponentiation der mit einer Bezeichnung versehenen Muster bewirkt und man vor der Zurücksendung durch die jeweiligen Wandler eine numerisch-analoge Umwandlung bewirkt.

16. Vorrichtung zur akustischen Überprüfung eines Milieus zur Erkennung von reflektierenden Zielen mit mehreren Sender-Empfänger-Wandlern, die eine Wandlermatrix (12) bilden, einer Schaltung (16), die mit den Wandlern verbunden ist und vorgesehen ist, um nach einer ersten Sendung gegen das Milieu eine ungerade Anzahl einer Empfangssequenz von Echosignalen zu wiederholen, die aus den Wandlern stammen, zur Speicherung dieser Signale und zur Zurücksendung der gespeicherten Signale zu den Wandlern nach einer zeitlichen Umkehrung, dadurch gekennzeichnet,

daß die Schaltung (16) Mittel (36) zur Bestimmung der Charakteristiken einer geometrischen Oberfläche, die am nächsten an den Maxima der Signale vorbeigeht und eine Wellenfront darstellt, und Mittel zur Bildung einer letzten Bestrahlungswellenfront aufweist, durch Sendung auf allen Bahnen entsprechend jeweils einem der mehreren Wandler von Signalen derselben Form und einer sehr kurzen Dauer zu einem Zeitpunkt, welcher für jeden Wandler durch eine Verzögerung definiert ist, die ein Komplement der zeitlichen Verteilung der Maxima bildet, wobei die ersten Maxima den Signalen kurzer Dauer entsprechen, die zuletzt gesendet worden sind.

17. Vorrichtung nach Anspruch 16,
dadurch gekennzeichnet,

daß die Schaltung für jeden Wandler (1,...,i,...,n) eine Bahn (20) mit einem Musterbildner (22), einen analognumerischen Umwandler (28), einen Speicher (30), der als Warteelement organisiert ist, einen numerischanalogen Wandler und Mittel zur Verstärkung und zur Kompensation der Dämpfung (38,40,42,34) aufweist, und daß die Rechenmittel vorgesehen und programmiert sind, um Zugang zu jedem der Speicher (30) zum Lesen und zum Schreiben und zum Modifizieren des Wertes und der zeitlichen Verteilung der gespeicherten Muster zu haben, um diese in Übereinstimmung mit der geometrischen Annäherung zu bringen, die von der Wellenfront bewirkt wird.

## Claims

1. Method of non-destructive acoustic (sound or ultrasound) inspection of a medium for localizing reflective targets, comprising the steps of:

   (a) illuminating the medium (18) with a highly divergent acoustic beam from at least one transducer;
   (b) detecting the signals reflected by the medium and received by a plurality of transducers (1,...,n) belonging to an array (12);
   (c) selecting by means of a time window (T), the echo signals reflected by a particular zone of said medium and storing them in digital form;
   (d) time-reversing and re-transmitting said echo signals;
   (e) storing the new reflected echo signals and repeating the time reversal operation,

   wherein, after a last time-reversal, the characteristics of a wave front closest to the maxima of the reflected signals is determined,
   characterized by (f) forming a last illumination wave front by emitting, on all the channels each corresponding to one of the plurality of transducers, signals having the same shape and of very short duration, at times defined for each transducer by a delay complementary of the time distribution of said maxima, the first maxima corresponding to the signals of very short duration emitted at last,
   in that the last time-reversal is of order 2n+1 (where n is a positive or null integer), and in that, after said last time-reversal, characteristics of a simple geometric surface closest to the maxima of the reflected signal and representative of the wave front of the last received echoes is determined.

2. Method according to claim 1, characterized by summing the reflected echo signals from signals offset by applying said time delays over the whole depth of a measurement time window (fig. 16).

3. Method according to claim 1 or 2, characterized in that, the medium having an interface, the reflected signals during step (c) are only stored during a time window which discards the echoes on said interface.

4. Method according to claim 1, characterized by the further step of exploring sectorwise the target corresponding to the maxima, while maintaining a transmission and reception focussing by combining said delays with another delay law.

5. Method according to any one of claims 1 to 4, characterized by the preliminary step of determining said window (T) by incoherently summing the echoes from said illumination and selecting said time window so that it includes the maxima of all the echo signals.

6. Method according to any one of claim 1 to 4, characterized by the step of arbitrarily selecting the time window from information available on the depth of possible targets (10) in the medium.

7. Method according to any one of the preceding claims, characterized by determining the characteristics of a simple geometrical surface, such as a sphere best matching said wave front according to a given criterion which can be represented by a polynomial equation.

8. Method according to any one of the preceding claims, characterized in that the criterion is the least square criterion.

9. Method according to claim 8, characterized by the step of determining the variance of the deviation and by the step of discarding said surface as the representation of the wave front when the variance exceeds a predetermined value.

10. Method according to claim 7, 8 or 9, characterized in that, in a subsequent step, the delay distribution corresponding to said surface is reproduced to focus ultrasound energy onto the most important target.

11. Method according to claim 7, 8 or 9, characterized in that the surface being a sphere, calculations are made to deduce, from the characteristics of the sphere, the location of its center and the delays to be applied to the signals provided to each of the transducers so as to focus the energy transmitted by the transducers to a position laterally shifted with respect to said center.

12. Method according to any one of claims 1 to 11, characterized by the step of searching a reflective target (10) by comparing the echo signals received during two successive time-reversal iterations.

13. Method according to claim 12, characterized in that the similarity between signals received in successive iterations is determined by comparing to a threshold, the measurement of cross-correlation coefficients of two consecutive transmissions, for each of the transducers.

14. Method according to any one of claims 1 to 4, characterized by the step of computing, on reception, the convolution product of the echo signals and of the time reversed transmitted signals.

15. Method according to any one of the preceding claims, characterized in that during step (c), the analog echo signals from the transducers are submitted to a logarithmic amplification; the amplified echo signals are stored as digital samples with a sign bit, and a digital depth compensation digital ramp is added to said samples, and in that, during step (d), the sign is reaffected to the compensated samples, the samples are digitally exponentiated and a digital-analog conversion is carried out before retransmission by the respective transducers.

16. Device for acoustically examining a medium and locating reflective targets, comprising:

a plurality of emitter-receiver transducers constituting a transducer array (12);
a circuit (16) connected to the transducers and arranged for, after a first transmission toward the medium, repeating an odd number of times a sequence including: receiving echo signals through said transducers, storing said signals, and re-emitting the stored signals after time reversal,

characterized in that said circuit (16) comprises means (36) to determine the characteristics of a geometrical surface closest to the maxima of the signals and representing a wave front, and means to form a last illumination wave front by emitting, on all the channels each corresponding to one of the plurality of the transducers, signals having the same shape and of very short direction at times defined for each transducers by a delay complementary of the time distribution of said maxima, the first maxima corresponding to the signals of short duration emitted at last.

17. Device according to claim 16, characterized in that:

said circuit comprises, for each transducer $(1,...,i,...,n)$ a processing channel (20) having a sampler (22), an analog-digital converter (28), a stack-type memory (30), a digital-analog converter and means for amplification and attenuation compensation (38,40,42,34), and

said computation means are arranged and programmed for read and write access to each of the memories (30) in said channels and to modify the values and the time distribution of the stored samples for them to correspond to the geometrical approximation of the wave front.

# FIG.1.

# FIG.2.

# FIG.3.

15

FIG.3A.

FIG.4.

FIG.5.

# FIG.6.

# FIG.7.

FIG.8.

FIG.9.

FIG.10.

FIG.11.

FIG.12.

# FIG.13.

# FIG.14.

FIG.15.

30dB

Log S

t

FIG.16.

Log S

t

FIG.17.

46

44

12

18

50

48

Σ

ΔT